# EUROPEAN PATENT SPECIFICATION

(11) **EP 3 147 690 B1**
(45) Date of publication and mention of the grant of the patent: **20.02.2019**
(21) Application number: 16189047.0
(22) Date of filing: 15.09.2016
(51) Int. Cl.: G01S 17/42, G01S 17/10, G01S 7/486, G01S 7/497

(54) **CIRCUIT DEVICE, OPTICAL DETECTOR, OBJECT DETECTOR, SENSOR, AND MOVABLE DEVICE**
SCHALTUNGSVORRICHTUNG, OPTISCHER DETEKTOR, OBJEKTDETEKTOR, SENSOR UND BEWEGLICHE VORRICHTUNG
DISPOSITIF DE CIRCUIT, DÉTECTEUR OPTIQUE, DÉTECTEUR D'OBJET, CAPTEUR ET DISPOSITIF MOBILE

(30) Priority: 25.09.2015 JP 2015187568
(43) Date of publication of application: 29.03.2017
(73) Proprietor: Ricoh Company, Ltd., Tokyo 143-8555 (JP)
(72) Inventor: NISHIO, Takuei, Ohta-ku, Tokyo 143-8555 (JP)
(74) Representative: J A Kemp

(56) References cited:
- DE-B3-102011 056 963
- US-A- 2 765 462
- US-A1- 2008 068 584
- US-A1- 2013 250 272

## Description

### BACKGROUND

### Technical Field

The present disclosure generally relates to a circuit device, an optical detector, an object detector, a sensor, a movable device, a method for detecting light, and a method for detecting an object.

### Related Art

There have been conventionally known techniques that calculate the distance to an object based on the timing of emitting light from a light-emitting element to the object and the timing of receiving light reflected by the object at a light-receiving element (see, for example, JP-2011-128112-A, JP-2009-063339-A, JP-2012-107984-A, JP-2009-069003-A, and JP-2014-040063 (JP-2015-165195-A)).

However, there is room for improvement in the accuracy of detection of the timing of receiving light at the light-receiving element in the techniques disclosed in JP-2011-128112-A, JP-2009-063339-A, JP-2012-107984-A, JP-2009-069003-A, and JP-2014-040063 (JP-2015-165195-A).

According to the present disclosure, it is possible to accurately detect the timing of receiving light at the light receiving element.

US 2013/250272 A1 discloses a LIDAR device comprising a threshold detector circuit that differentiates a laser return signal.

### SUMMARY

According to the present invention, there is provided an object detector, a sensor and a movable device as specified in the claims.

In an aspect of this disclosure, there is provided a circuit device including a waveform processing circuit and a binarizing circuit. The waveform processing circuit generates undershoot in a voltage signal according to an output voltage from a light-receiving element. The binarizing circuit binarizes the voltage signal based on a threshold value.

In another aspect of this disclosure, there is provided an optical detector including the circuit device described above and the light-receiving element.

In still another aspect of this disclosure, there is provided an object detector including a projection device including a light-emitting element to emit light, to project the light to the object. The object detector further includes the optical detector described above. The optical detector includes the light-receiving element to receive the light projected from the projection device to the object and reflected from the object. The object detector further includes a distance calculating device to calculate a distance to the object based on a timing of emitting the light from the light-emitting element and a timing of receiving the light at the light-receiving element. The distance calculating device calculates the timing of receiving the light based on a first timing when a rising value of the voltage signal coincides with the threshold value and a second timing when a falling value of the voltage signal coincides with the threshold value.

Further described is a sensor including the object detector described above and a monitoring controller. The monitoring controller obtains, in response to an output of the object detector, movement data including at least one of presence of an object, a direction of movement of the object, and a speed of movement of the object.

Still further described is a movable device including a movable body and at least one of the object detector described above which is disposed in the movable body and the sensor described above which is disposed in the movable body.

According to the present disclosure, the accuracy of detection of pulsed light projected onto and reflected from an object can be improved.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is a schematic illustration of an object detector according to an embodiment of the present disclosure;
FIG. 2A is an illustration of a projection optical system and a synchronous system;
FIG. 2B is an illustration of a light-receiving optical system;
FIG. 2C is a schematic view of an optical path from a laser diode (LD) to a reflection mirror and another optical path from the reflection mirror to a time-measuring photo diode (PD);
FIG. 3A is a schematic illustration of a first PD output detector according to an embodiment of the present disclosure;
FIG. 3B is a schematic illustration of a second PD output detector according to an embodiment of the present disclosure;
FIG. 4A is a schematic illustration of configuration of a first optical detector according to an embodiment of the present disclosure;
FIG. 4B is a schematic illustration of configuration of a second optical detector according to an embodiment of the present disclosure;
FIG. 5A is a graph illustrating the waveform of a received-light signal including noise according to Comparative Example 1;
FIG. 5B is a graph illustrating the waveform of a received-light signal including noise according to Example 1;
FIG. 6A is a circuit diagram of a negative feedback circuit according to Comparative Example 1;
FIG. 6B is a circuit diagram of a negative feedback circuit according to Example 1;
FIG. 7A is a graph illustrating the waveform of a received-light signal according to Comparative Example 2;
FIG. 7B is a circuit diagram of a negative feedback circuit according to Comparative Example 2;
FIG. 8A is a graph illustrating the waveform of a received-light signal according to Example 2;
FIG. 8B is a circuit diagram of a negative feedback circuit according to Example 2;
FIG. 9A is a graph illustrating the waveform of a received-light signal according to Example 3;
FIG. 9B is a circuit diagram of a negative feedback circuit according to Example 3;
FIG. 10A is a graph illustrating the waveform of a received-light signal according to Example 4;
FIG. 10B is a circuit diagram of a negative feedback circuit according to Example 4;
FIG. 11A is a circuit diagram of a negative feedback circuit according to Example 5;
FIG. 11B is a graph illustrating the relations of the amount of undershoot and the full width half maximum of emitted-pulsed light according to Example 5;
FIG. 12A is a graph of the rise and fall time of the emitted-light pulse according to Example 6;
FIG. 12B is a graph of rise and fall time of a received signal according to Example 6;
FIG. 13 is a schematic illustration of time measurement errors among received-light signals having different peak values according to Example 7;
FIG. 14 is a schematic illustration of a sensor; and
FIG. 15 is a circuit diagram of a feedback circuit including a high-pass filter according to another Example.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

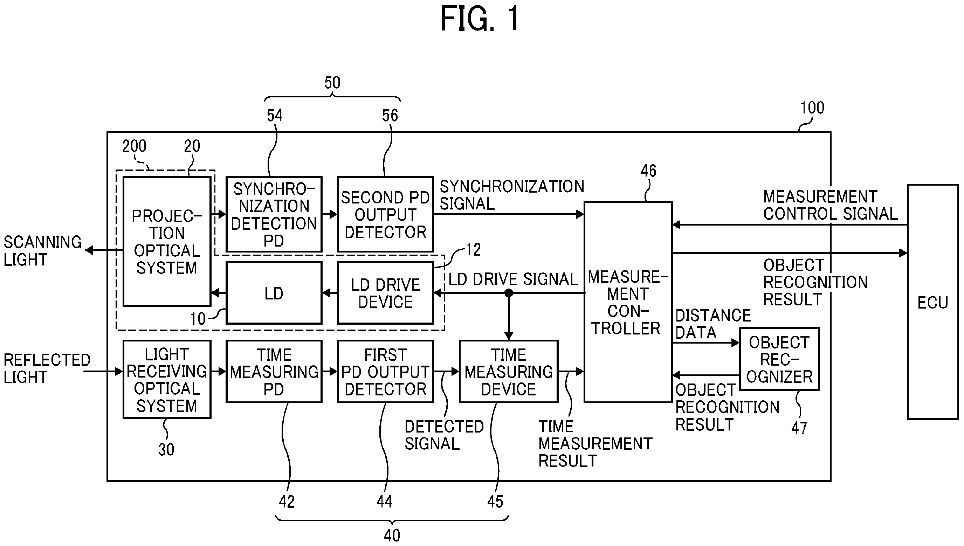

A description is provided of an object detector 100 according to one embodiment of the present disclosure referring to FIGS. 1 through 13.

FIG. 1 is a block diagram of a schematic configuration of the object detector 100.

The object detector 100 is a scanning laser radar to detect the presense of an object, such as a preceding vehicle, a parked vehicle, a structure, or a pedestrian, and the distance to the object. The object detector 100, which is mounted on a vehicle, e.g., an automobile, as a movable body, is powered from a vehicle battery.

The object detector 100 includes a laser diode (LD) 10 as a light-emitting element, an LD drive device 12, a projection optical system 20, a light-receiving optical system 30, an optical detector 40, a time measuring device 45, a measurement controller 46, and an object recognizer 47.

The LD 10, which is also called an edge emitting laser, is driven by the LD drive device 12 (a drive circuit) to emit a laser beam. The LD drive device 12 causes the LD 10 to emit a laser beam, using an LD drive signal, which is a rectangular pulse signal, output from the measurement controller 46. Examples of the LD drive device 12 include a capacitor connected to the LD 10 to supply electric current to the LD 10, a transistor to switch conduction and non-conduction between the capacitor and the LD 10, and a charger to charge the capacitor. The measurement controller 46 starts or stops the measurement in response to a measurement control signal from an engine control unit (ECU) on vehicle.

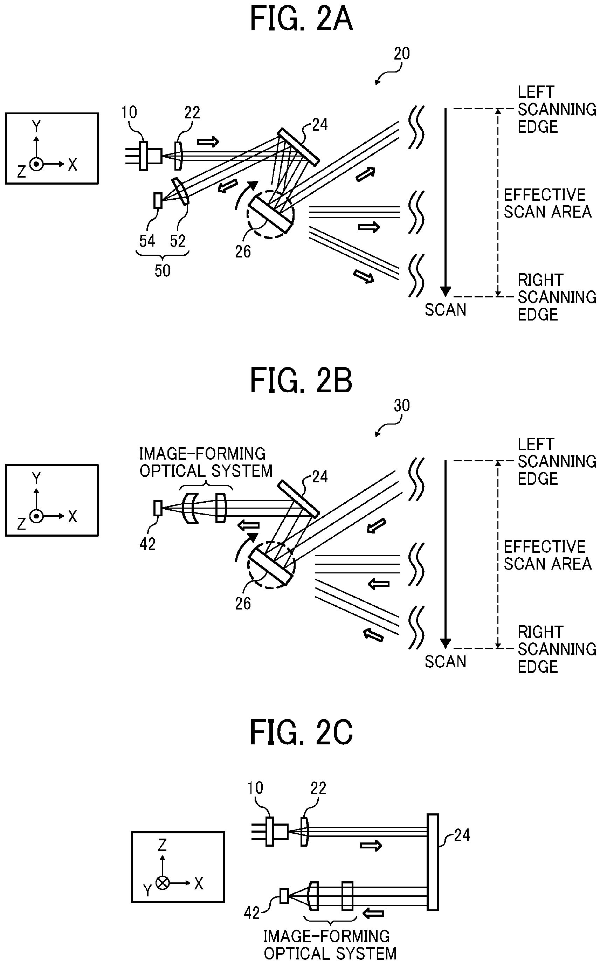

FIG. 2A schematically illustrates the projection optical system 20 and a synchronous system 50. FIG. 2B schematically illustrates the light-receiving optical system 30. A description is provided below of the projection optical system 20, the synchronous system 50, and the light-receiving optical system 30, using a three-dimensional rectangular coordinate system illustrated in FIGS. 2A, 2B, and 2C as appropriate, in which a vertical direction is a Z-axis direction.

The projection optical system 20 includes a coupling lens 22, a reflection mirror 24, and a rotating mirror 26 as a deflector. The coupling lens 22 is disposed on the optical path of light emitted from the LD 10. The reflection mirror 24 is disposed on the optical path of the light having passed through the coupling lens 22. The rotating mirror 26 is disposed on the optical path of the light reflected from the reflection mirror 24. In this case, the reflection mirror 24 is disposed on the optical path connecting the coupling lens 22 and the rotating mirror 26, folding the optical path to reduce the size of the object detector 100.

Through such optical path, the light emitted from the LD 10 is shaped into a predetermined beam profile by the coupling lens 22, and the shaped light is then reflected from the reflection mirror 24. The rotating mirror 26 deflects the reflected light around the axis Z within a predetermined range of deflection.

The light deflected by the rotating mirror 26 corresponds to light projected by the projection optical system 20, which is light projected from the object detector 100.

The rotating mirror 26 includes a plurality of reflection faces around the axis of rotation (axis Z), to reflect (deflect) the light reflected from the reflection mirror 24 while rotating around the axis of rotation, thereby causing the light to unidimensionally scan an effective scan area corresponding to the range of deflection in a horizontal one-axis direction (Y-axis direction). In this case, the range of deflection, i.e., the effective scan area lies on +X side. Hereinafter, the direction of rotation of the rotating mirror 26 is referred to as a "direction of rotation of mirror".

The rotating mirror 26 includes, as illustrated in FIG. 2A, two reflection faces opposed to each other. Alternatively, in some embodiments, the configuration is not limited to this configuration, and the rotating mirror 26 includes one reflection face or three or more reflection faces. Alternatively, in some embodiments, the rotating mirror 26 includes at least two reflection faces, which are tilted at different angles with respect to the axis of rotation (axis Z), to switch an area to be scanned and detected in Z-axis direction.

Thus, the LD 10, the LD drive device 12, and the projection optical system 20 constitute an optical scanning system 200 to optically scan the effective scan area with light.

The light-receiving optical system 30 includes, as illustrated in FIG. 2B, the rotating mirror 26, the reflection mirror 24, and an image-forming optical system. The rotating mirror 26 reflects light projected from the projection optical system 20 and reflected (scattered) by an object disposed within an effective scan area. The reflection mirror 24 reflects the light reflected from the rotating mirror 26. The image-forming optical system is disposed on the optical path of the light reflected from the reflection mirror 24, to form an image of the light reflected from the reflection mirror 24 onto a time measuring PD 42.

FIG. 2C is an illustration of an optical path from the LD 10 to the reflection mirror 24 and another optical path from the reflection mirror 24 to the time measuring PD 42.

As is clear from FIG. 2C, the projection optical system 20 and the light-receiving optical system 30 overlap with each other in Z-axis direction. The rotating mirror 26 and the reflection mirror 24 are common between the projection optical system 20 and the light-receiving optical system 30. Such a configuration reduces relative misalignment between the range of illumination of the LD and the range of light receivable by the time measuring PD 42 on an object, thus achieving stable detection of the object.

The light projected from the projection optical system 20 and reflected (scattered) by an object proceeds, via the rotating mirror 26 and the reflection mirror 24, to the image-forming optical system, and is collected on the time measuring PD 42 through the image-forming optical system (see FIG. 2B). In FIG. 2B, the reflection mirror 24 is disposed between the rotating mirror 26 and the image-forming optical system, folding the optical path to reduce the size of the system. In this case, the image-forming optical system includes two lenses (image-forming lenses). However, in some embodiments, the image-forming optical system may include a single lens or three or more lenses. Alternatively, in some embodiments, a mirror optical system may be employed for the image-forming system.

As illustrated in FIGS. 1 and 2B, the optical detector 40 includes a time measuring PD (photodiode) 42 as a light-receiving element, and a first PD output detector 44 as a circuit device. The time measuring PD 42 receives, through the light-receiving optical system 30, light projected from the projection optical system 20 and reflected by an object disposed within the effective scan area. The first PD output detector 44 detects (binarizes) a received light signal that is a voltage signal according to an output current (a current signal) from the time measuring PD 42.

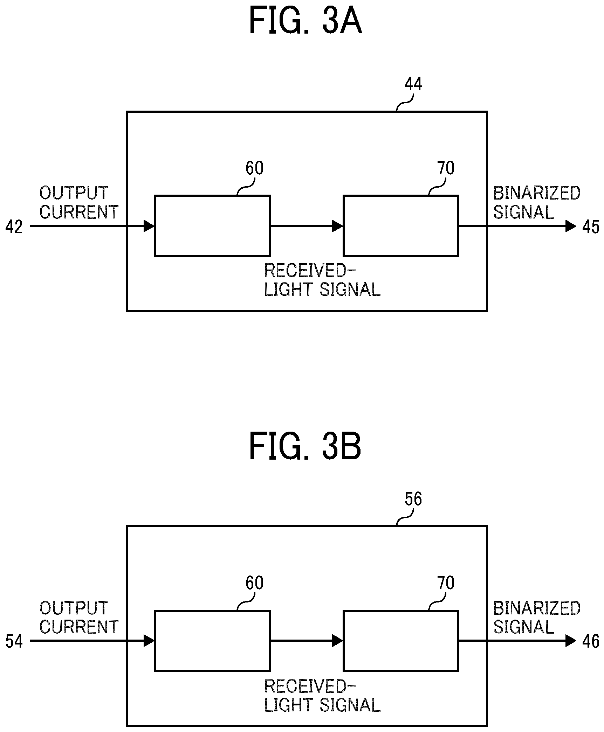

As illustrated in FIG. 3A, the first PD output detector 44 includes a waveform processing circuit 60 and a binarizing circuit 70.

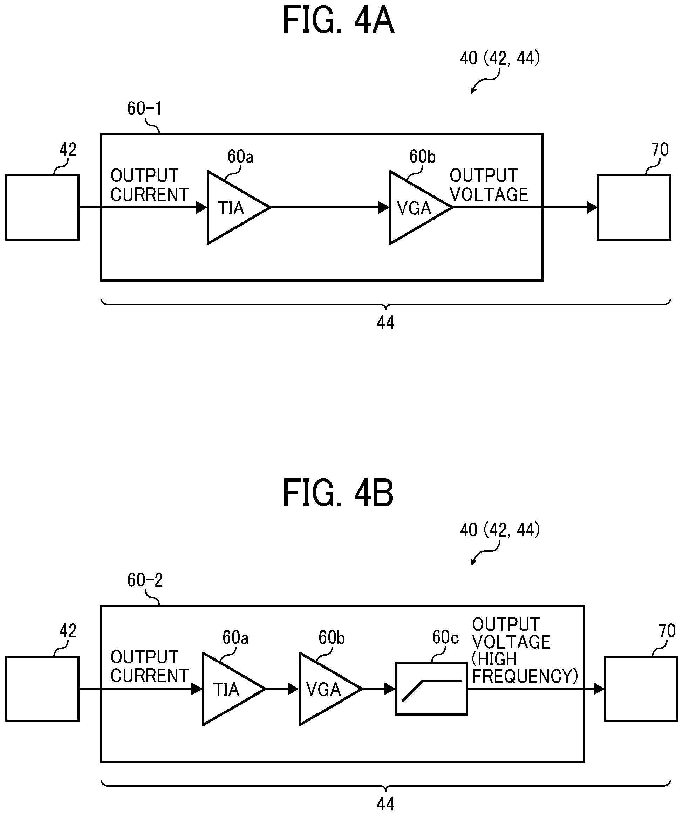

Referring to FIGS. 4A and 4B, the waveform processing circuit 60 includes a current-voltage converter 60a, such as a Transimpedance Amplifier (TIA), and a signal amplifier 60b such as a high-linearity analog variable-gain amplifier (VGA). The current-voltage converter 60a converts the output current (current value) from the time measuring PD 42 into a voltage signal (voltage value). The signal amplifier 60b amplifies the voltage signal output from the current-voltage converter 60a. It is to be noted that FIG. 4A illustrates a first waveform processing circuit 60-1 as an example of the waveform processing circuit 60 and FIG. 4B illustrates a second waveform processing circuit 60-2 as another example.

The binarizing circuit 70 binarizes an analog voltage signal output from the signal amplifier 60b based on a threshold voltage value and outputs the binarized signal (digital signal) as a detected signal to the time measuring device 45.

As illustrated in FIGS. 1 and 2A, the synchronous system 50 includes a synchronization lens 52, a synchronization detection PD 54 as another light-receiving element, and a second PD output detector 56 as another circuit device. The synchronization lens 52 is disposed on an optical path of light. The light is emitted from the LD 10, advancing through the coupling lens 22. The light is then reflected from the reflection mirror 24, and deflected by the rotating mirror 26. The deflected light is reflected again from the reflection mirror 24. The synchronization detection PD 54 is disposed on the optical path of the light having passed through the synchronization lens 52. The second PD output detector 56 detects a received signal that is a voltage signal according to an output current from the synchronization detection PD 54.

Specifically, the reflection mirror 24 is disposed upstream from the range of deflection in the direction of rotation of the rotating mirror 26. The light deflected on the rotating mirror 26 toward upstream from the range of deflection enters the reflection mirror 24. The light deflected on the rotating mirror 26 and reflected from the reflection mirror 24 enters the synchronization detection PD 54 via the synchronization lens 52. At this time, the output current from the synchronization detection PD 54 is sent to the second PD output detector 56.

As illustrated in FIG. 3B, the second PD output detector 56 includes the waveform processing circuit 60 and the binarizing circuit 70 in the same manner as the first PD output detector 44 does.

It is to be noted that, in some embodiments, the reflection mirror 24 is disposed downstream from the range of deflection in the direction of rotation of the rotating mirror 26. Further, the synchronous system 50 may be disposed on the optical path of the light deflected on the rotating mirror 26 and reflected from the reflection mirror 24.

Rotation of the rotating mirror 26 causes the synchronization detection PD 54 to output a current on every receipt of light reflected from the reflection face of the rotating mirror 26 on the synchronization detection PD 54. That is, the synchronization detection PD 54 periodically outputs a current to the second PD output detector 56.

Emitting light for synchronization to irradiate the synchronization detection PD 54 with light coming from the rotating mirror 26 allows the timing of rotation of the rotating mirror 26 to be obtained from the timing of light receiving of the synchronization detection PD 54.

With an elapse of a predetermined length of time after the LD 10 emits light for synchronization, the LD 10 emitting pulsed light allows the effective scan area to be optically scanned. That is, the LD 10 emits pulsed light during a period of time before and after the timing of illuminating the synchronization detection PD 54, thereby optically scanning the effective scan area.

In this case, examples of the light-receiving element for measuring time and detecting synchronization include a photo diode (PD) as described above, an avalanche photo diode (APD), and a single photon avalanche diode (SPAD) as a Geiger mode APD. The APD and the SPAD have high sensitivity for accuracy of detection and the detection of distance.

The second PD output detector 56 detects (binarizes) the received-light signal, which is the voltage signal according to the output current from the synchronization detection PD 54, and then outputs a synchronization signal (binarized signal) to the measurement controller 46.

The measurement controller 46 generates an LD drive signal based on the synchronization signal from the PD output detector 56, and outputs the LD drive signal to the LD drive device 12 and the time measuring device 45.

That is, the LD drive signal is an emission control signal (periodic pulsed signal) which is delayed relative to the synchronization signal.

When receiving the LD drive signal, the LD drive device 12 applies a drive current to the LD 10. The LD 10 then outputs pulsed light. In this case, the duty of the pulsed light emitted from the LD 10 is restricted in consideration for the safety and durability of the LD 10. This is why the pulse width of the pulsed light emitted from the LD10 is preferably narrower. The pulse width is generally set in a range from approximately 10 ns through approximately several dozen ns. The pulse interval is approximately several dozen microseconds in general.

The first PD output detector 44 converts a current output from the time measuring PD 42 into a voltage signal. The first PD output detector 44 further amplifies and binarizes the voltage signal, outputting the binarized signal (digital signal) as a detected signal to the time measuring device 45.

The time measuring device 45 calculates a time difference between the timing of receipt of the LD drive signal from the measurement controller 46 and a predetermined timing that is the intermediate timing between the timing of rise of and the timing of fall of the detected signal (binarized signal) output from the first PD output detector 44. The time measuring device 45 then outputs the calculated time difference as a time measurement result to the measurement controller 46.

The measurement controller 46 converts the measurement result from the time measuring device 45 into distance to calculate a back-and-forth distance to and from an object and output the half of the back-and-forth distance as distance data to the object recognizer 47.

The object recognizer 47 recognizes the position of an object based on a plurality of sets of distance data obtained by one or more scans, outputting an object recognition result to the measurement controller 46. The measurement controller 46 transfers the object recognition result to the ECU.

The ECU performs, based on the transferred object recognition result, a steering control of a vehicle, such as auto-steering, and a speed control such as autobrake.

FIGS. 4A and 4B specifically illustrates a first waveform processing circuit 60-1 and a second waveform processing circuit 60-2, respectively in the optical detector 40 according to the present embodiment of this disclosure.

As illustrated in FIG. 4A, the first waveform processing circuit 60-1 includes the current-voltage converter 60a and the signal amplifier 60b.

When receiving the pulsed light reflected from the object, the time measuring PD 42 converts the amount of the received light (the pulsed light received by the time measuring PD 42) into a current value. The first waveform processing circuit 60-1 receives the current value as an output current. In the first waveform processing circuit 60-1, the current-voltage converter 60a converts the received (input) current value into a voltage value. The signal amplifier 60b increases the converted voltage value, outputting the voltage value as a received-light signal (output voltage) to the binarizing circuit 70.

In this case, the signal amplifier 60b has a negative feedback function. For example, a non-inverting amplifier circuit (negative feedback circuit) including an operational amplifier OA is used to reduce the amplification degree. Reducing the amplification degree leads to a greater amount of feedback, thereby causing undershoot and overshoot to occur in the received-light signal. The pulse of the light reflected from the object has substantially the same waveform as the waveform of the pulse (hereinafter, referred to as the emitted-light pulse) of the pulsed light of the pulsed light. The pulse width of the reflected-light pulse ranges from 10 ns through several dozen ns. Preferably, the circuit device 44 and the optical detector 40 according to the present embodiment response to the reflected-light pulse in a sufficiently rapid manner (high rapid response). In some embodiments, an inverting amplifier circuit (positive feedback circuit) may be used to generate at least undershoot in the received-light signal, instead of the non-inverting amplifier circuit (negative feedback circuit) employed.

In some embodiments, the waveform processing circuit 60-1 preferably copes with a frequency bandwidth ranging from approximately several dozen MHz through a hundred and several tens of MHz as real. With an increase in signal amplification factor in the waveform processing circuit 60-1, detection errors are less likely to occur due to disturbance, such as sun light, and internal noise. This is because it is preferable for the signal amplification factor in the waveform processing circuit 60-1 to be greater or to be greater than five times in some embodiments. To satisfy the above-described frequency bandwidth and amplification factor, an amplifier, e.g., the VGA having a gain bandwidth product of greater than or equal to approximately 500 MHz is preferably used as the operational amplifier OA.

The principle of undershoot and overshoot is the same as the phenomenon in a position control system including a particle, a spring, and an attenuator such that with an excessively increased spring constant (too much feedback), the spring repeatedly goes forward (overshoot) and backward (undershoot) from a steady-state position to return to the steady-state position, accompanying damped oscillation.

As illustrated in FIG. 4B, the second waveform processing circuit 60-2 includes a high-pass filter 60c in addition to the current-voltage converter 60a the signal amplifier 60b.

In the second waveform processing circuit 60-2, the current-voltage converter 60a converts the current value (output current) from the time measuring PD 42 into a voltage value in the same manner as in the first waveform processing circuit 60-1. The signal amplifier 60b amplifies the converted voltage value, outputting the voltage value as a received-light signal (output voltage) to the high-pass filter 60c.

The amplified voltage value (received-light signal) passes through the high-pass filter 60c, which induces undershoot of the received-light signal. In such a manner, only a low-frequency component is cut out from the received-light signal, the voltage value of which normally goes down to the ground level in a moderate manner, thereby obtaining a signal that steeply falls. With such a manner that employs the high-pass filter 60c, undershoot may or may not be caused to occur in the signal amplifier 60b.

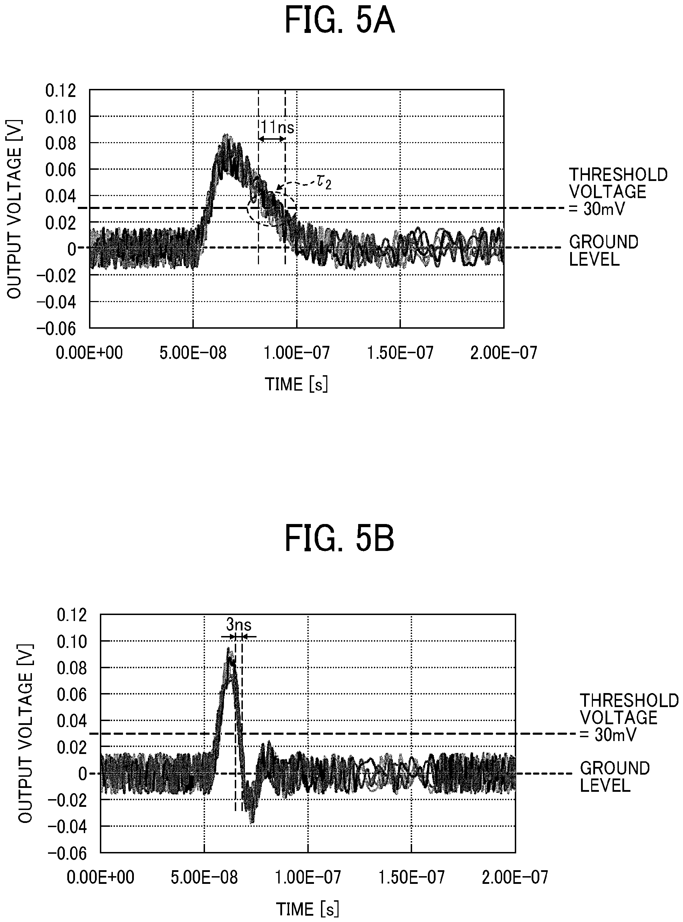

FIG. 5A represents a received-light signal waveform according to Comparative Example 1. FIG. 5B represents a received-light signal waveform according to Example 1 of the present embodiment.

In Comparative Example 1 illustrated in FIG. 5A, undershoot is not generated in five received-light signals. The received-light signal waveforms of FIG. 5A according to Comparative Example 1 represent the simulation results of the waveforms of the five received-light signals with noise and sets of light-receiving time τ2 measured for the respective received-light signals. Each light-receiving time τ2 refers to a timing at which a falling value of each received-light signal coincides with the threshold voltage. The noise is white color noise. It is found that without undershoot generated in the received-light signal, each received-light signal (output voltage) slowly (gently) falls and the measurement error between the sets of light-receiving time τ2 is large due to the fluctuations in the signals caused by noise included in the signals.

In Example 1 illustrated in FIG. 5B, undershoot is generated in five received-light signals. The received-light signal waveforms of FIG. 5B according to Example 1 represent the simulation results of the waveforms of the five received-light signals and the sets of light-receiving time τ2 measured for the respective received-light signals.

When Example 1 is compared with Comparative Example 1, it is found that each received-light signal abruptly (sharply) rises and the fluctuations in the signals due to noise are reduced in Example 1. As a result, the measurement error between the sets of the light-receiving time τ2 is reduced.

In Comparative Example 1, the measurement error between the sets of the received-light time 2 for five times of measurement is 11 ns, which is converted to 1.6 m as distance data. By contrast, in Example 1, the measurement error through five times of measurement is 3 ns, which is converted to 0.5 m as distance data.

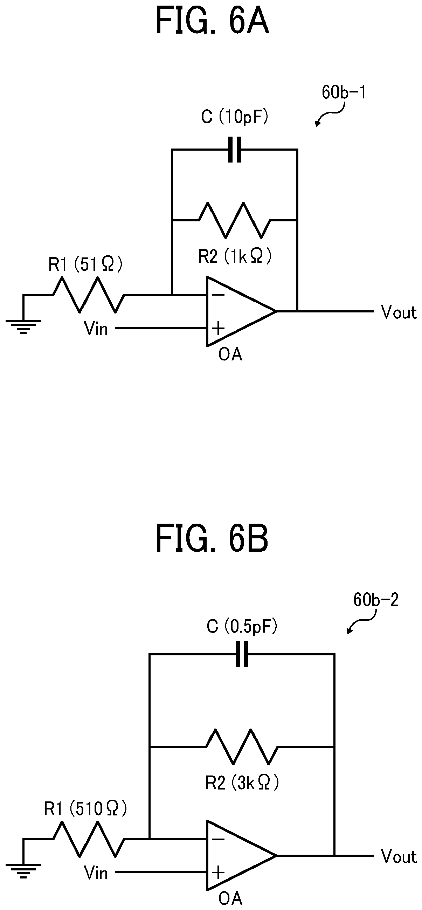

The received-light signal waveform of FIG. 5A (Comparative Example 1) is a waveform in which noise is superimposed, obtained by inputting a bell-shaped pulse voltage with a full width at half maximum (FWHM) of 10 ns and a peak voltage of 10 mV into a negative feedback circuit 60b-1. The received-light signal waveform of FIG. 5B (Example 1) is a waveform in which noise is superimposed, obtained by inputting the bell-shaped pulse voltage with a FWHM of 10 ns and a peak voltage of 10 mV into a negative feedback circuit 60b-2. That is, the received-light signal waveforms according to Comparative Example 1 and Example 1 represent the simulation results corresponding to the negative feedback circuits 60b-1 of FIG. 6A and 60b-2 of FIG. 6B, respectively, both of which are used as the signal amplifier 60b of FIG. 4A.

Each of the negative feedback circuits 60b-1 and 60b-2 includes a resistor R1, a resistor R2, and a capacitor C. The resistor R1 has one end electrically grounded or applied with bias voltage and the other end connected with a negative input end of the operational amplifier OA. The resistor R2 and the capacitor C are connected with the operational amplifier OA in parallel. The operational amplifier OA has a positive input end that receives the voltage output from the current-voltage converter 60a. In some embodiments, each of the negative feedback circuits 60b-1 and 60b-2 does not include the capacitor C.

In this case, with a smaller ratio of the resistance of the resistor R2 relative to the resistance of the resistor R1 (hereinafter, referred to simply as the value of R2 / R1), the amplification degree (negative feedback) is reduced, thereby increasing the amount of undershoot.

In Comparative Example 1, the capacitor C has a capacitance of 10 pF, the resistor R1 has a resistance of 51 Ω, and the resistor R2 has a resistance of 1 kΩ. In Example 1, the capacitor C has a capacitance of 0.5 pF, the resistor R1 has a resistance of 510 Ω, and the resistor R2 has a resistance of 3 kΩ.

In Example 1, the value of R2 / R1 is relatively small and the amount of undershoot is large. By contrast, in Comparative Example 1, the value of R2 / R1 is relatively large and the amount of undershoot is substantially zero.

In both of Comparative Example 1 and Example 1, the threshold voltage value is 30 mV as illustrated in FIGS. 5A and 5B. It is found that under the same conditions (the amount of input reflected-light pulse and the threshold voltage value are the same), the accuracy of the result of the time measurement is higher in Example 1 than that of Comparative Example 1. The threshold voltage value is generally several dozen mV, which is determined in consideration of the size of exogenous noise. The threshold voltage value is preferably greater than the ground level to prevent an erroneous detection of exogenous noise. Further, when the timing of receiving light is defined as a predetermined timing, e.g., the intermediate timing between the timing of rise of the detected signal (binarized signal) and the timing of fall of the detected signal (binarized signal), the threshold voltage value is preferably as small as possible to increase the accuracy of detection. Thus, the appropriate threshold voltage value is naturally determined.

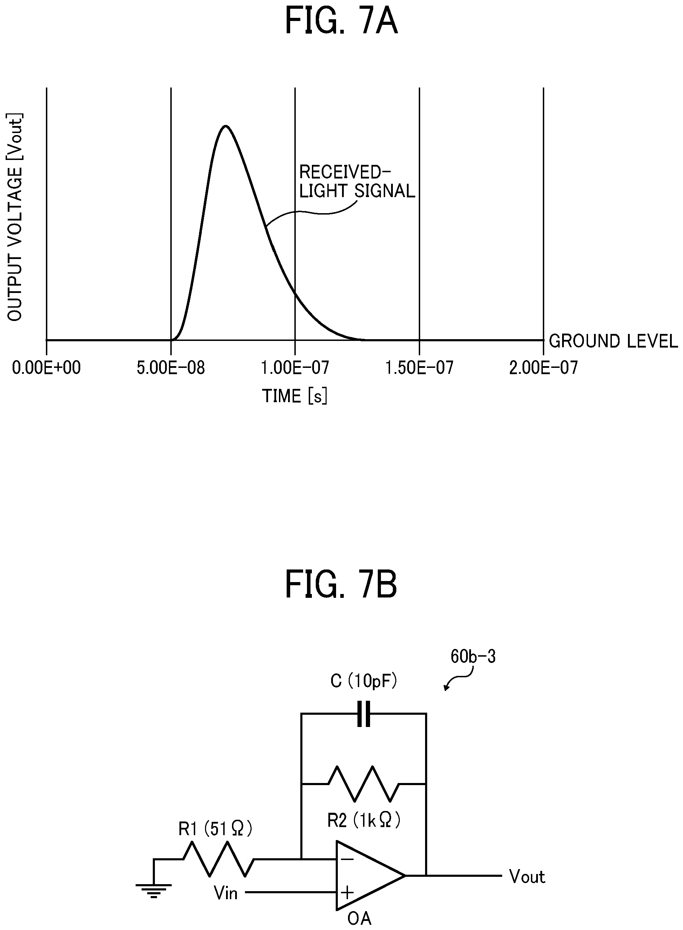

FIGS. 7A and 7B illustrate a received-light signal waveform according to Comparative Example 2 and a negative feedback circuit 60b-3 according to Comparative Example 2, respectively. As in Comparative Example 2 in which the negative feedback circuit is employed, with an excessively increased amplification factor (degree) or with an excessively reduced frequency bandwidth of the circuit relative to an input signal (for example, an amplification factor of 21 times and a frequency bandwidth of 12 MHz in the circuit of FIG. 7B), the amount of negative feedback increases and thereby undershoot does not occur (refer to FIG. 7A).

In Comparative Example 2, the capacitor C has a capacitance of 10 pF, the resistor R1 has a resistance of 51 Ω, and the resistor R2 has a resistance of 1 kΩ.

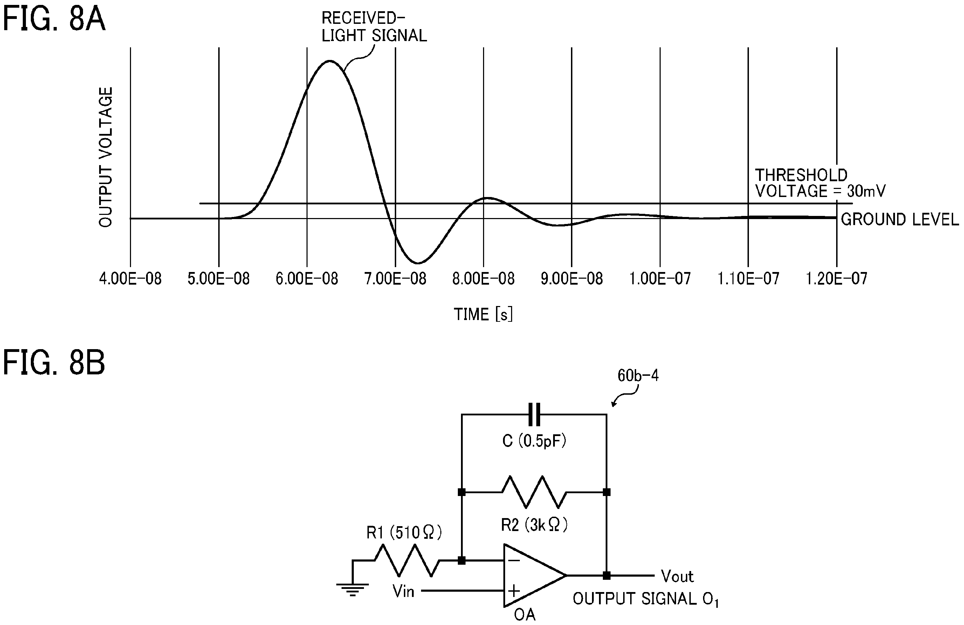

FIGS. 8A and 8B illustrate a received-light signal waveform according to Example 2 and a negative feedback circuit 60b-4 according to Example 2, respectively. As in Example 2, with an excessively decreased amplification factor (degree) or with an excessively increased frequency bandwidth of the circuit relative to an input signal (for example, an amplification factor of 7 times and a frequency bandwidth of 90 MHz in the circuit of FIG. 8B), the amount of ringing after the occurrence of undershoot increases and thereby the input signal with a great voltage exceeds the threshold value again after falling (refer to FIG. 8A).

In Example 2, the capacitor has a capacitance of 0.5 pF, the resistor R1 has a resistance of 510 Ω, and the resistor R2 has a resistance of 3 kΩ.

The received-light signal waveform of FIG. 8A is a waveform obtained by inputting the bell-shaped pulse voltage with a FWHM of 10 ns and a peak voltage of 10 mV into the negative feedback circuit 60b-4. When the received-light signal exceeds the threshold value again after falling, the first PD output detector 44 outputs the erroneously detected pulse signal to the time measuring device 45 so that the object recognizer 47 unsuccessfully recognizes data based on the erroneously detected pulse signal as the second object.

Accordingly, setting appropriate values of the frequency bandwidth and amplification factor relative to the frequency component of the input signal (voltage signal) increases the accuracy of the time measurement with undershoot generated in the signal and prevents the erroneous detection of pulse of the signal.

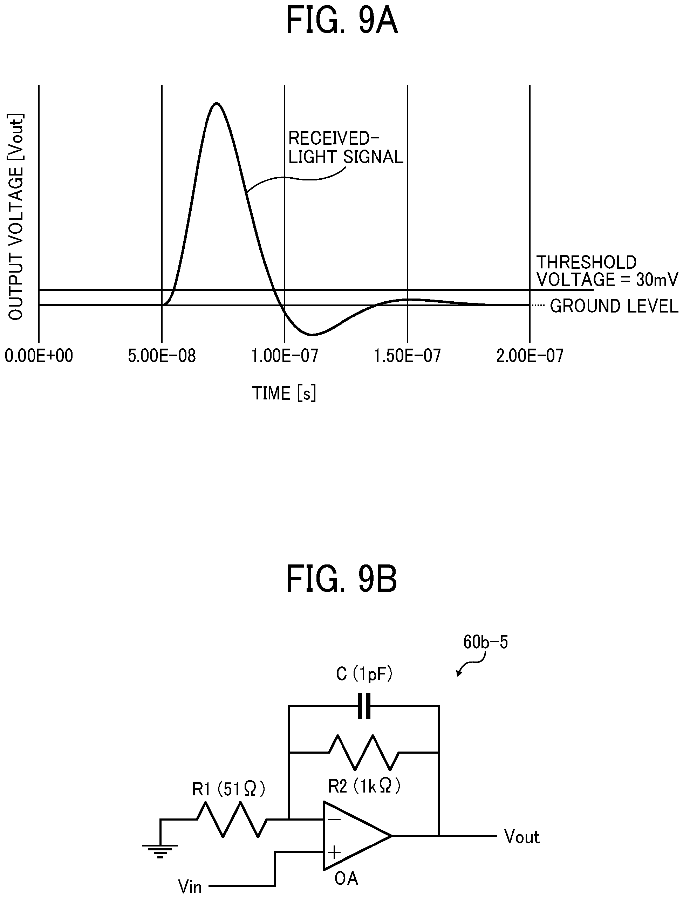

FIGS. 9A and 9B illustrate a received-light signal waveform and a negative feedback circuit 60b-5 according to Example 3, respectively as a specific example of the above-described setting. In Example 3, the received-light signal waveform in which the amount of ringing after undershoot occurs is reduced is obtained as illustrated in FIG. 9A. With such a signal waveform, the erroneous detection of pulse of the received-light signal is prevented.

In Example 3, the capacitor has a capacitance of 1 pF, the resistor R1 has a resistance of 51 Ω, and the resistor R2 has a resistance of 1 kΩ.

The received-light signal waveform of FIG. 9A is obtained by inputting a bell-shaped pulse signal (voltage) with a FWHM of 15 ns into the negative feedback circuit 60b-5 of FIG. 9B which is used as the signal amplifier 60b of the waveform processing circuit 60 of FIG. 4A. The negative feedback circuit 60b-5 of FIG. 9B includes the operational amplifier OA having a gain bandwidth product of 750 MHz and a slew rate of 280 V/us, constituting a non-inverting amplifier circuit with an amplifier factor of 21 times and a frequency bandwidth of 80 MHz.

As described above, when undershoot occurs in the received-light signal waveform, the pulse of the input signal may be erroneously detected due to ringing generated after undershoot occurs in the waveform.

When the ringing itself is eliminated or reduced to prevent such an erroneous detection of pulse, the occurrence of undershoot is less likely to exhibit the advantageous effects, resulting in diminish in effectiveness of improved accuracy of the time measurement (the measurement of distance).

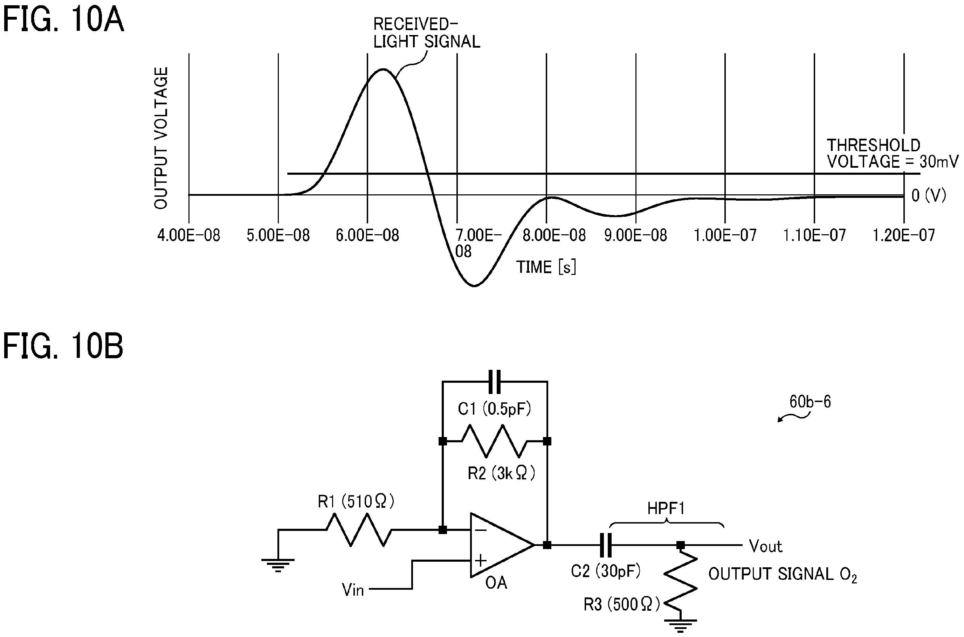

In consideration of the above-described circumstance, a received-light signal waveform as illustrated in FIG. 10A is achieved, in which a time period from a time when undershoot occurs to a time when the signal voltage recovers to the ground level is longer than a setting time that is a time period from a time when undershoot occurs to a time when ringing is stopped, i.e., the ratio of the amplitude of ringing to the maximum amplitude of the received-light signal is less than or equal to 5%. With such a waveform achieved, the erroneous detection of pulse is prevented and the accuracy of the time measurement (distance measurement) with undershoot generated in the signal waveform is improved.

Specifically, a high-pass filter HPF1 with a long time constant is disposed downstream of the signal amplifier 60b, which induces undershoot, to cut off a low-frequency component, thereby delaying the electric discharge to ground.

Now, a description is given of the principle of Example 4. The received-light signal waveform of FIG. 10A is obtained by inputting the received-light signal of FIG. 8A into a waveform processing circuit 60-2a in which the high-pass filter HPF1 is disposed downstream of the negative feedback circuit 60b-4 of FIG. 8B. The high-pass filter HPF1 operates as a differentiation circuit. Accordingly, the phase of the received-light signal waveform of FIG. 10A is advanced as compared to the phase of the received-light signal waveform of FIG. 8A. That is, an output signal O₂ from the high-pass filter HPF1 more greatly falls than an output signal O₁ from the negative feedback circuit 60b-4, i.e., an input signal to the high-pass filter HPF1 does before the output signal O₁ completely falls. As a result, the maximum value of the received-light signal (voltage) with ringing is less than or equal to the threshold voltage value.

In Example 4, the capacitor has a capacitance of 0.5 pF, the resistor R1 has a resistance of 510 Ω, and the resistor R2 has a resistance of 3 kΩ in the negative feedback circuit 60b-4.

In the waveform according to Example 4, the ringing occurs on the electrical discharge according to the time constant of the high-pass filter HPF1 after the received-light signal completely falls. In this case, the output signal from the high-pass filter HPF1 is not greatly influenced by a change in the signal (input signal) input to the high-pass filter HPF1 because the input signal is not changed a lot in the high-pass filter HPF1 as compared to in the other components disposed upstream of the high-pass filter HPF1.

The received-light signal waveform of FIG. 10A is obtained by inputting the received-light signal into the waveform processing circuit 60-2a of FIG. 10A having an amplification factor of seven times and a frequency bandwidth of 90 MHz in which capacitor C2 with a capacitance of, e.g., 30 pF, a resistor R3 with a resistance of 500 Ω, and the high-pass filter HPF1 are disposed downstream of the negative feedback circuit 60b-4 of FIG. 8B. With such a signal waveform of FIG. 10A, the erroneous detection of pulse of the received-light signal is prevented while maintaining a response speed similar to the response speed in Example 2 of FIG. 8A in which a large degree of ringing occurs. Tr and Tf are 5.9 ns and 4.4 ns, respectively in FIG. 8B, and Tr and Tf are 5.5 ns and 3.6 ns, respectively in FIG. 10B. In this case, Tr refers to a rise time which is a time period from a time when the voltage of the received-light signal arrives at the voltage corresponding to 10% of the peak voltage to a time when the voltage of the received-light signal arrives at the voltage corresponding to 90% of the peak voltage. Tf refers to a fall time that is a time period from when the voltage of the received-light signal arrives at the voltage corresponding to 90% of the peak voltage to when the voltage of the received-light signal arrives at the voltage corresponding to 10% of the peak voltage.

In Examples 2 and 4, a bell-shaped pulse with a half maximum full-width of 10 ns is employed as input pulse.

The negative feedback circuit 60b-6 of FIG. 10B according to Example 4 is constructed of non-inverting amplifier circuit having an amplification factor of 6 times and a frequency bandwidth of 90 MHz and a high-pass filter HPF1 with a time constant of 15 ns.

With the configuration of the negative feedback 60-b according to Example 4, the erroneous detection of pulse is prevented without reducing ringing itself, thereby obtaining a particularly steeply falling waveform, thus improving the accuracy of time measurement.

Next, a description is given of Example 5, referring FIG.S 11A and 11B.

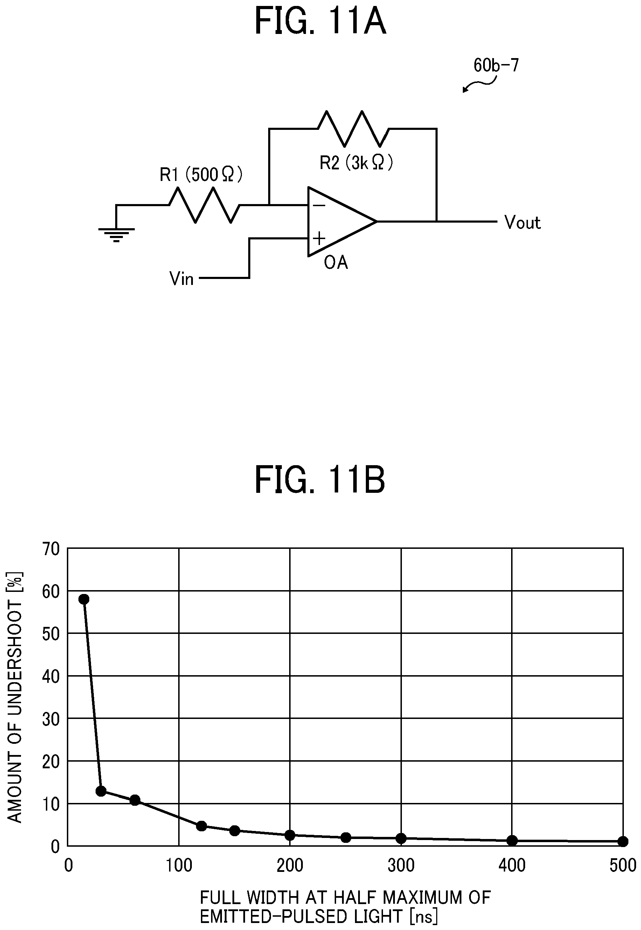

FIG. 11A illustrates a negative feedback circuit 60b-7 (non-inverting amplifier circuit) with an amplification factor of seven times and a frequency bandwidth of 85 MHz. FIG. 11B is a graph representing the simulation results of response to an input of a voltage value according to the amount of received reflected-light pulse of a bell-shaped pulsed light emitted from the LD 10, in the negative feedback circuit 60b-7 of FIG. 11A. In the graph of FIG. 11B, the horizontal axis represents a full width at half maximum (ns) and the vertical axis represents the amount of undershoot (%).

In Example 5, a resistor R1 has a resistance of 500 Ω, and a resistor R2 has a resistance of 3 kΩ in the negative feedback circuit 60b-7. The negative feedback circuit 60b-7 according to Example 5 does not include a capacitor C.

Specifically, emitted-light pulse with a peak output of 10 mV and with a half sine wave ranging from 0 (rad) through π (rad) is used. The amounts of undershoot (%) with changes in full width at half maximum (a time period from π / 12 (rad) through 5π / 12 (rad)) are simulated.

In this case, the amount of undershoot is defined as a value obtained by dividing the difference between the ground level and the peak value of undershoot by 60 mV (the value obtained by multiplying 10 mV (the peak value of the emitted-light pulse) by 6 times (the amplification factor of the negative feedback circuit 60b-7)) and multiplying the divided value by 100 to be expressed in percentage.

As is found from FIG. 11B, with a full width at half maximum less than or equal to 150 ns, a large amount of undershoot is ensured. Further, with a full width at half maximum less than or equal to 120 ns, a larger amount of undershoot is ensured. With a full width at full width at half maximum less than or equal to 50 ns, a much larger amount of undershoot is ensured.

In general, when a high-output LD is driven to emit pulsed light, the pulse of the emitted light (emitted-light pulse) tends to fall slowly. When the emitted-light pulse from the LD is caused to fall at a speed higher than or equal to the speed of rise of the emitted-light pulse, the circuit employed increases in size, which may lead to an increase in size and cost for a device.

Thus, the emitted-light pulse from the LD is preferably caused to fall in a speed slower than the speed of rise of the emitted-light pulse and a waveform processing circuit generates undershoot in the received-light signal to speed up the fall of the received-light signal.

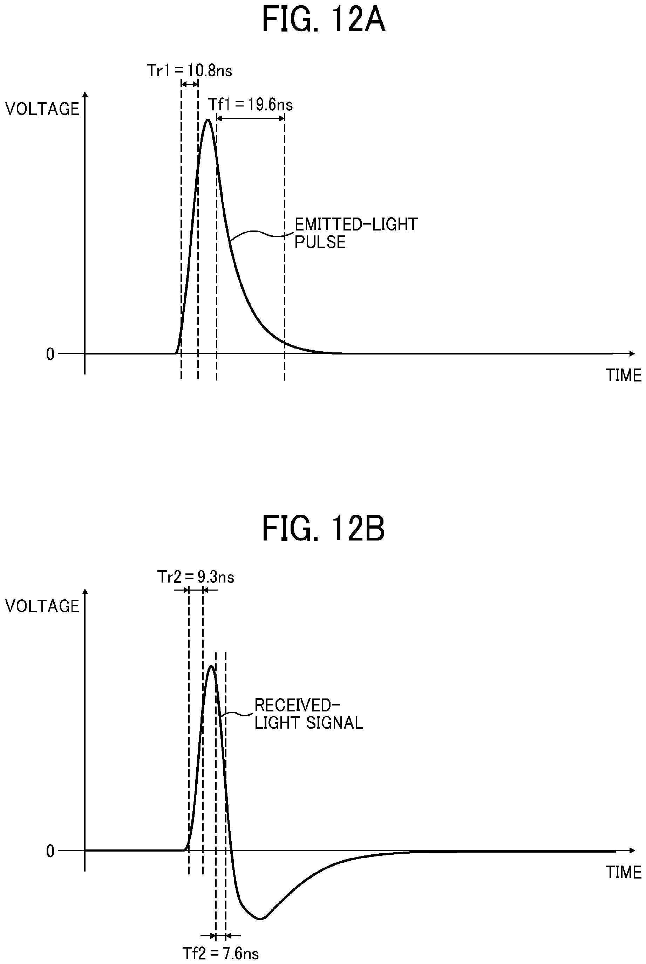

According to Example 6, FIG. 12A represents a rise time Tr1 and a fall time Tf1 of the emitted pulsed light. The rise time Tr1 refers to a time period from a time when the voltage of the emitted-light pulse arrives at the voltage corresponding to 10% of the peak voltage to a time when the voltage of the emitted-light pulse arrives at the voltage corresponding to 90% of the peak voltage. The fall time Tf1 of the emitted-light pulse refers to a time period from a time when the voltage of the emitted-light pulse arrives at the voltage corresponding to 90% of the peak voltage to a time when the voltage of the emitted-light pulse arrives at the voltage corresponding to 10% of the peak voltage. FIG. 12B represents a rise time Tr2 and a fall time Tf2 of the received-light signal (output voltage). The rise time Tr2 refers to a time period from a time when the voltage of the received-light signal arrives at the voltage corresponding to 10% of the peak voltage to a time when the voltage of the received-light signal arrives at the voltage corresponding to 90% of the peak voltage. The fall time Tf2 of the received-light signal (output voltage) refers to a time period from a time when the voltage of the received-light signal arrives at the voltage corresponding to 90% of the peak voltage to a time when the voltage of the received-light signal arrives at the voltage corresponding to 10% of the peak voltage). When a received-light signal waveform satisfying the relation of Tf1 / Tr1 > Tf2 / Tr2 is obtained, a received-light signal waveform that steeply falls (Tr2 and Tf2 are 9 ns and 8 ns, respectively) as illustrated in FIG. 12B is achieved even relative to the emitted-light pulse that slowly falls (Tr1 and Tf1 are 11 ns and 20 ns, respectively) as illustrated in FIG. 12A.

The received-light signal waveform according to Example 6 illustrated in FIG. 12B is obtained by, e.g., the negative feedback circuit 60b-6 with an amplification factor of six times and a frequency bandwidth of 90 MHz as illustrated in FIG. 10B, used as the signal amplifier 60b of the waveform processing circuit 60. The negative feedback circuit 60b-6 includes the non-inverting amplifier circuit and the high-pass filter HPF1 with a time constant of 15 ns.

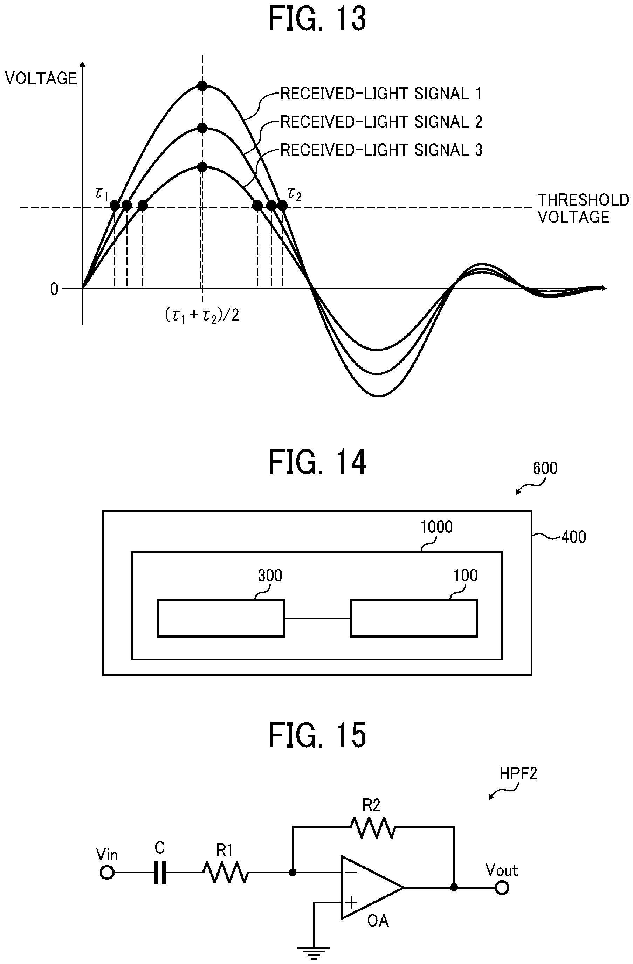

As illustrated in FIG. 13, with shorter rise time and shorter fall time, the accuracy of time measurement increases. Thus, the configuration according to Example 6 increases the accuracy of the time measurement and the distance measurement.

Further, in the configuration according to Example 6, there is no need to speed up the rise of the emitted-light pulse, thus allowing a cost reduction and the increase in accuracy of the distance measurement.

FIG. 13 represents the waveforms of plural received-light signals (for example, three received-light signals 1 through 3) which has been reflected from the respective objects (in this case, three objects) and received by the time measuring PD 42, according to Example 7. In this case, the respective objects are disposed at the common distance from the device of the present disclosure, each object having a different reflection factor. As is found from FIG. 13, with the objects having different reflection factors, the received-light signals 1 through 3 have different maximum values. With such a difference in maximum value among the received-light signals 1 through 3, the measurement results of the light-receiving time τ1 and the light-receiving time τ2 differ among the received-light signals 1 through 3. When either one of the measurement results of the light-receiving time τ1 and the measurement results of the light-receiving time τ2 is used to measure the distance to each object by the Time-of-Flight (TOF) method, the measured distance varies depending on the reflection factor of the object.

Thus, in Example 7, the light-receiving time (the timing of receiving light) of the pulsed light reflected from the object is determined by, e.g., the expression: (τ1 + τ2) / 2. With this configuration, the results of distance measurement are less likely to depend on the amount of light.

According to Example 7, the light-receiving time of the reflected-light pulse is corrected by the expression: τ1 + f(τ2 - τ1), where f is function and τ2 - τ1 is a pulse width with τ1 as reference.

The PD output detector 44 as a circuit device according to the above-described present embodiment of this disclosure includes the waveform processing circuit 60 and the binarizing circuit 70. The waveform processing circuit 60 generates undershoot in the voltage signal according to the output current from the time measuring PD 42 as a light-receiving element. The binarizing circuit 70 binarizes the received-light signal, which is the voltage signal in which undershoot has been generated, based on the threshold voltage value (threshold value).

In this case, the received-light signal steeply falls, thereby eliminating or reducing the effects of noise, thus allowing a stable and accurate detection of the timing (arbitrary timing during the fall time) of fall of the received-light.

Specifically, for example, the timing of receiving light at the light-receiving element is obtained based on the rising timing and the falling timing of the received-light signal, thereby allowing an accurate detection of the timing of receiving light.

Thus, the timing of receiving light at the light receiving element is accurately detected.

It is to be noted that, a typical emitted-light pulse rises relatively sharply and falls relatively slowly so that the received-light signal also falls relatively sharply and falls relatively slowly. When undershoot is not generated in the received-light signal, it is difficult to accurately detect the falling timing (arbitrary timing during the fall time of the received-light signal) of the received-light signal although the rising timing of the received-light signal is detected in a relatively accurate manner.

When the maximum value of the received-light signal ringing after undershoot occurs in the received-light signal is less than or equal to the threshold value, the erroneous detection of the received-light signal is prevented.

The waveform processing circuit 60, which includes the signal amplifier 60b (amplifier circuit), easily generates undershoot in the received-light signal.

Further, when the amplification factor of the signal amplifier 60b is set to a degree that generates undershoot, the erroneous detection of the received-light signal (erroneous detection of an object) is prevented without eliminating or reducing ringing, resulting in both an increase in speed of response and a prevention of erroneous detection of the received-light signal. It is to be noted that when ringing is eliminated or reduced to prevent the erroneous detection of the received-light signal, the response speed to the received-light signal slows down.

Further, when the frequency bandwidth and amplification factor of the signal amplifier 60b is set to a degree such that the maximum value of the received-light signal ringing after undershoot occurs is less than or equal to the threshold value, the erroneous detection of the received-light signal is easily prevented.

When the waveform processing circuit 60 further includes a filter circuit disposed downstream of the signal amplifier 60b, the recovery time of the received-light signal to the ground level after undershoot occurs is longer than the setting time of ringing.

When the filter circuit induces undershoot, there is no need to set the amplification factor of the signal amplifier 60b to a degree that generates undershoot.

When the filter circuit is a high-pass filter, a low-frequency component of the received-light signal after undershoot occurs is cut, thereby reliably delaying the recovery time to the ground level.

Further, when the time constant of the filter circuit is set to a degree such that the maximum value of the received-light signal ringing after undershoot occurs is less than or equal to the threshold value, the erroneous detection of pulse is reliably prevented.

When the filter circuit delays the timing of stop of ringing of the received-light signal after undershoot is generated, the erroneous detection of pulse is prevented.

Further, the optical detector 40 including the PD output detector 44 as the circuit device and the time measuring PD 42 as the light-receiving element according to the present embodiment allows an accurate detection of the timing of receiving light at the light-receiving element.

The object detector 100 according to the present embodiment includes a projecting device including the LD 10 as a light-emitting element, the optical detector 40, and the measurement controller 46 as a distance calculating device. The optical detector 40 includes the time measuring PD 42 as the light-receiving element to receive light having been projected from the projection optical system 20 to an object and reflected from the object. The measurement controller 46 calculates the distance to the object based on the timing of emitting light from the LD 10 and the timing of receiving light at the time measuring PD 42.

In this case, the distance to the object is accurately calculated.

The measurement controller 46 obtains the timing of receiving light based on a first timing at which the rising value of the received-light signal coincides with the threshold value and a second timing at which the falling value of the received-light signal coincides with the threshold value. In this case, undershoot is generated after the second timing.

With such a configuration, the timing of receiving light is accurately detected and the distance to an object is accurately obtained.

Further, the measurement controller 46 obtains the intermediate timing between the first timing and the second timing, as the timing of receiving light. With such a configuration, the timing of receiving light and the distance to an object are stably and accurately detected irrespective of the maximum value of the received-light signal (the amount of receiving light).

Further, when the full width at half maximum of the pulsed light emitted from the LD 10, is less than or equal to 150 ns, undershoot is effectively caused to occur in the received-light signal, thereby increasing the accuracy of measuring the time at which a falling value of the received-light signal coincides with the threshold value.

With the relation of Tf1 / Tr1 > Tf2 / Tr2 satisfied, a received-light signal waveform that quickly (steeply) falls is obtained even when the emitted-light pulse has difficulties in falling at a high speed due to the effects of stray capacity. In this case, Tr1 denotes a rise time of the emitted-light pulse (the pulse of the pulsed light emitted from the LD 10) and Tf1 denotes a fall time of the emitted-light pulse. Tr2 and Tf2 denote the rise time of the voltage signal and the fall time of the voltage signal, respectively.

The LD 10, which is a semiconductor laser, further increases the accuracy of the measurement of distance to an object.

Further, the movable device 600 including the object detector 100 and a movable body 400 that includes the object detector 100 accurately measures the distance to an object and appropriately controls the movable body 400 according to the distance to an object. Thus, the movable device 600 with excellent safety is provided.

The sensor 1000 includes the object detector 100 and the monitoring controller 300 to, in response to the output of the object detector 100, obtain object data (at least one of the presence of an object, the position of the object, the direction of movement of the object, and the speed of movement of the object). The sensor 1000 reliably and accurately obtains the object data.

The sensor 1000 is mounted on the movable body 400. The monitoring controller 300, based on at least one of the position data and the movement data of the object, judges the presence of danger, thereby providing effective data for avoiding danger to an operational control system and a speed control system of a movable body 400, for example.

Further, a movable device 600 including at least one of the object detector 100 mounted on the movable body 400 and the sensor 1000 mounted on the movable body 400 has excellent safety against impact.

A method for optical detection according to the present embodiment includes receiving light at the time measuring PD 42 as a light-receiving element, converting an output current from the time measuring PD 42 into a voltage signal (received-light signal), generating undershoot in the voltage signal, binarizing the voltage signal after undershoot is generated, and obtaining the timing of receiving light at the time measuring PD 42 based on the binarizing timing.

With such a configuration, the received-light signal steeply falls, thereby eliminating or reducing the effects of noise, thus allowing a stable and accurate detection of the timing (arbitrary timing during the fall time) of fall of the received-light.

Specifically, for example, the timing of receiving light at the light-receiving element is obtained based on the rising timing and the falling timing of the received-light signal, thereby allowing an accurate detection of the timing of receiving light.

Thus, the timing of receiving light at the light receiving element is accurately detected.

A method for detecting an object according to the present embodiment includes projecting light emitted from the LD10 as a light-emitting element, receiving the light reflected from the object at the time measuring PD 42 as a light-receiving element, converting an output current from the time measuring PD 42 into a voltage signal (received-light signal), generating undershoot in the voltage signal, binarizing the voltage signal after undershoot is generated, obtaining the timing of receiving light at the time measuring PD 42 based on the binarizing timing, and calculating the distance to the object based on the timing of emitting light from the LD 10 and the obtained timing of receiving light.

According to the present disclosure of this application, it is possible to accurately detect the timing of receiving light at the light receiving element and obtain the distance to the object.

The optical detector 40 according to the present embodiment of this disclosure includes the time measuring PD 42 as a light-receiving element and the waveform processing circuit 60. The waveform processing circuit 60 generates undershoot in the received-light signal, i.e., a voltage signal according to the output current from the time measuring PD 42.

With such a configuration, the received-light signal steeply falls, thereby eliminating or reducing the effects of noise, thus allowing a stable and accurate detection of the timing (arbitrary timing during the fall time) of fall of the received-light.

Specifically, for example, the timing of receiving light at the light-receiving element is obtained based on the rising timing and the falling timing of the received-light signal, thereby allowing an accurate detection of the timing of receiving light.

Thus, the timing of receiving light at the light receiving element is accurately detected.

When the optical detector 40 further includes the binarizing circuit 70 to binarize, based on the threshold voltage value (threshold value), the received-light signal after undershoot is generated, the rising timing and the falling timing of the received-light signal are accurately obtained.

When the maximum value of the received-light signal ringing after undershoot is generated is less than or equal to the threshold value, the erroneous detection of the received-light signal is prevented.

In the above-described embodiment, undershoot is caused to occur in the received-light signal received by the time measuring PD 42 as the light-receiving element. Alternatively, in some embodiments, undershoot may occur in the received-light signal of the synchronization detection PD 54 as the light-receiving element in addition to or instead of the received-light signal of the time measuring PD 42. In this case, the synchronization detection PD 54, and the PD output detector 56 including at least signal amplifier 60b may constitute an "optical detector". With such an optical detector, the synchronization timing is detected with a high accuracy, thereby allowing an accurate scanning of an effective scan area. In this case as well, the maximum value of the received-light signal ringing is preferably less than or equal to the threshold value which is the reference value for detecting the timing of receiving light. With this configuration, the erroneous detection of the synchronization timing is prevented.

FIG. 11 is a schematic view of a sensor with the object detector 100. The sensor 1000, which is mounted on the movable body 400, includes the object detector 100 and a monitoring controller 300 electrically connected to the object detector 100. The object detector 100 is mounted in the vicinity of a bumper or a rear-view mirror in a vehicle. The monitoring controller 300, based on the detection results of the object detector 100, estimates the size or shape of an object, and calculates the position and movement data of the object, recognizing the type of the object. The monitoring controller 300 ultimately judges presence of danger. With an affirmative judgment for danger, the monitoring controller 300 issues an alarm (alert) to an operator of the movable body 400, to invite the operator's attention. Alternatively, the monitoring controller 300 issues an order to a steering controller of the movable body 400 to avoid the danger by steering, or issues an order to the ECU to brake the movable body 400. It is to be noted that the sensor 1000 receives power supply from a vehicle battery, for example.

Further, the monitoring controller 300 may be integrated into the object detector 100. Alternatively, in some embodiment, the monitoring controller 300 may be disposed separately from the object detector 100. The monitoring controller 300 performs a part of the control function of the ECU in some embodiments.

According to the present embodiment, a sing LD is used for the light source. However, the present disclosure is not limited to this configuration. Examples of the light source include a laser diode (LD) array, in which a plurality of laser diodes are unidimensionally or two-dimensionally arranged, a Vertical Cavity Surface Emitting Laser (VCSEL), the VCSEL array, in which the VCSEL is unidimensionally or two-dimensionally arranged, other lasers, a light emitting diode (LED), a LED array in which a plurality of LED is unidimensionally or two-dimensionally arranged, an organic light emitting (EL) element, and an organic EL array in which a plurality of organic EL elements are unidimensionally or two-dimensionally arranged. Examples of the LD array, in which a plurality of laser diodes are unidimensionally arranged, include a stack LD array, in which a plurality of laser diodes are stacked, and another type of LD array, in which a plurality of laser diodes are horizontally lined up. As the semiconductor laser, for example, the VCSEL may be substituted for the LD, thereby allowing more light-emitting points to be set within the array.

In the above-described embodiment, the high-pass filter HPF1 is used as a high-pass filter. However, the present disclosure is not limited to the high-pass filter HPF1, and for example, a high-pass filter HPF2 that includes an operational amplifier OA as illustrated in FIG. 15 may be used.

Further, in the above-described embodiment, a high-pass filter is used as a filter circuit disposed downstream of the negative feedback circuit. However, the present disclosure is not limited to such a high-pass filter and a band-pass filter may be used to cut a low frequency.

In the above-described embodiment, the waveform processing circuit 60 includes the negative feedback circuit that generates undershoot. Alternatively, in some embodiments, the waveform processing circuit 60 may include a positive feedback circuit to generate undershoot.

In some embodiments, the waveform processing circuit 60 may not include at least one of the current-voltage converter 60a and the high-pass filter (HPF) 60c. That is, the waveform processing circuit 60 may be constructed of the signal amplifier 60b (for example, a negative feedback circuit) in some embodiments. Alternatively, in some embodiments, the waveform processing circuit 60 may be constructed of the signal amplifier 60b and the high-pass filter 60c.

The projection optical system 20 may not include the coupling lens 22. Alternatively, the projection optical system 20 may include another type of lens.

The projection optical system 20 and the light-receiving optical system 30 may not include the reflection mirror 24. That is, light emitted from the LD enters the rotating mirror 26 without the folded optical path.

The light-receiving optical system 30 may not include a light receiving lens. Alternatively, the light-receiving optical system 30 may include another type of optical element, such as a collecting lens.

Instead of the rotating mirror 26 as the deflector, other types of mirrors, such as a polygon mirror (rotating polygon mirror), a galvano mirror, and a micro electro mechanical system (MEMS) mirror, are applicable.

The synchronous system 50 may not include the synchronization lens 52. Alternatively, the synchronous system 50 may include another type of optical element, such as a collecting lens.

In the above-described embodiments, a scanning laser radar is used as the object detector 100. In some embodiments, a non-scanning laser radar may be used instead.

According to the present embodiment, a vehicle is taken as an example for the movable body 400, on which the object detector 100 is mounted. Examples of the movable body 400 include a vehicle other than an automobile, an airplane, and a vessel.

Further, specific numerical values and shapes taken for the above description are illustrative only, and can be modified as appropriate without exceeding beyond the scope of the present disclosure.

As is apparent from the above-description, the first and second PD output detectors (circuit device) 44 and 56, the optical detector 40, the object detector 100, the sensor 1000, and the movable device 600 according to the present embodiment of this disclosure is the technology that measures the distance to an object, utilizing the Time-of-Flight (TOF) method or the technology for use in the TOF. Such a technology is widely used in the industries of the motion-capture technology, the range instruments, and the three-dimensional shape measurement technology, in addition to sensing a movable body 400. Therefore, the optical detector 40, the circuit devices (the first PD output detector 44 and the second PD output detector 56), and the object detector 100 of the present disclosure may not be mounted on a movable body 400.

Hereinafter, a description is provided of process of thinking, in which the inventor has conceived of the embodiments described above.

In recent years, a measuring device for measuring a back-and-forth distance to a target using the TOF method has been widely used in the industries of the technology for sensing vehicles, the motion-capture technology, and the range instruments. Such a measuring device includes a light-emitting element, a light-receiving element, and various drive circuits. The measuring device projects a light beam emitted from the light-emitting element to a measurement target and detects a difference in time between the timing of application of an emitted-light beam and the timing of receiving light reflected from the measurement target at the light-receiving element and the phase delay through signal processing by a signal processor, so that a back-and-forth distance to the target is measured.

As an example, there is a laser radar widely used to be mounted in air planes, vehicles, and vessels. There are various laser radar. As disclosed in Japanese Laid-Open Patent Application No. 2011-128112, Japanese Laid-Open Patent Application No. 2009-063339, Japanese Laid-Open Patent Application No. 2012-107984, and Japanese Laid-Open Patent Application No. 2009-069003, in a scanning laser radar as an example, a light source emits a laser beam, scanning with a rotating mirror. Then, an optical detector detects the light reflected or scattered on an object via the rotating mirror again, thereby detecting the presence of the object within a desired range and the distance to the object.

Such a scanning laser radar to scan detectable ranges of the detectors collects a laser beam on only a portion to be detected, which is advantageous from the viewpoints of the accuracy of detection, the detection of distance, and cost for the detector because the detectable range of the detector is minimized. However, the scanning laser radar generally fails to accumulate data so that detection errors are more likely to occur and it is more difficult to accurately detect distance at long range than non-scanning laser radar does.

The laser radar preferably measures the distance to an object in an extremely high accurate manner when used in, e.g., a car, to determine to stop the car or perform steering avoidance in response to forward presence of the object and the distance to the object. The laser radars for use in other systems are advantageous from the viewpoints of the accurate detection of an object.

When the TOF method is used for the distance measurement, the time at which the light reflected from a target is received by the light-receiving element in a particularly accurate manner, that is, the accuracy of the time measurement (time measurement accuracy) is highly weighted. In the TOF method, the time measurement accuracy and the distance measurement accuracy has the relation of 1 ns relative to 150 mm. The distance measurement accuracy of the order of 100 mm is needed for the steering avoidance and autonomous travel and therefore the time measurement accuracy of the order of hundreds of picoseconds is needed for the steering avoidance autonomous travel.

In such a case, there is a need for the detectable distance to be of the order of 100 m. In general, the amount of light reflected from the object in a distance of 100 m is approximately from several nW through several dozen nW.

As described above, the results of the time measurement, i.e., the response of the light-receiving system, at the time of receiving light with an amount of several nW vary by the order of hundreds of picoseconds. The received-light signal with respect to weak light of approximately several nW has a small signal strength so that the received-light signal is vulnerable to circuit noise and shot noise due to external light.

As an example of a simple method for measuring the time of receiving the reflected light, there is a method that employs only the time at which an increasing value of the received-light signal traverses the threshold value.

Such a method for measuring the time of receiving light includes increasing the speed of rise of the emitted-light pulse signal to increase the accuracy of the distance measurement as disclosed in JP-2014-040063 (JP-2015-165195-A). JP-2014-040063 (JP-2015-165195-A) has merely proposed the technique for increasing the speed of rise of the emitted-light pulse signal. Thus, JP-2014-040063 (JP-2015-165195-A) has difficulty in increasing the accuracy of the distance measurement because the detectable distance and the accuracy of the distance measurement are determined according to the response characteristics of the received-light system.

When only the time at which the increasing value of the received-light signal traverse the threshold value is used for the distance measurement, the results of the distance measurement changes with the amount of received light because the time at which the received-light signal traverses the threshold value changes with the amount of the light.

As another type of method for measuring the time of receiving the reflected light, there is a method that employs the time (hereinafter, referred to as light-receiving time τ1) at which an increasing value of the received-light signal traverses the threshold value and the time (hereinafter, referred to as light-receiving time τ2) at which a decreasing value of the received-light signal traverses the threshold value.

With such a method, the value of the distance measurement calculated using the light-receiving time τ1 is corrected with the data of the light-receiving time τ2 to significantly reduce the dependence of the distance-measurement results on the amount of light.

With such a method, the accuracy of the time measurement is less likely to be influenced by noise with a greater angle of the received-light signal when the value of the received-light signal traverses the threshold value, that is, with a larger amount of change in voltage per unit time. However, a high-output pulsed light from a pulse LD typically tends to fall in a slow manner so that the received-light signal also tends to fall in a slow manner. Thus, measuring the light-receiving time τ2 with a high degree of accuracy is difficult.

Particularly when an avalanche photodiode (APD) is used as the light-receiving element, the received-light signal is remarkably likely to fall slowly.

To achieve a bell-shaped symmetrical waveform that sharply rises and falls in a time scale ranging from several ns through several dozen ns as illustrated in FIG. 5 of JP-2011-128112-A and FIG. 8 of JP-2012-107984-A, a frequency bandwidth of hundreds of MHz, e.g., a bandwidth of 300 MHz with respect to a bell-shaped pulse of a FWHM of 30 ns and a bandwidth of 800 MHz with respect to a bell-shaped pulse of a FWHM of 10 ns, is needed.

With a wider bandwidth, an expensive element is used, noise increases, and a greater amount of gain in an amplifier circuit is difficult to obtain.

In consideration of the above-described circumstances, the inventor has invented the above-described embodiments to increase the accuracy of measurement of light-receiving time τ2 at low cost without increasing the amount of received light and to obtain a received-light signal which allows an increase in accuracy of the distance measurement of the object detector (100).

Specifically, the waveform processing circuit induces undershoot in a received-light signal to increase the accuracy of the distance measurement.

## Claims

1. An object detector (100) comprising
a projection device (200) including a light-emitting element (10) configured to emit light, to project the light to the object;
an optical detector (40); and
a distance calculating device (46)
wherein the optical detector (40) comprises:
a light receiving element (42) configured to receive the light projected from the projection device (10) to the object and reflected from the object; and
a circuit device (44), the circuit device comprising:
a waveform processing circuit (60) to generate undershoot in a voltage signal according to an output voltage from the light-receiving element (42); and
a binarizing circuit (70) to binarize the voltage signal based on a threshold value;
wherein the distance calculating device (46) is configured to calculate a distance to the object based on a timing of emitting the light from the light-emitting element (10) and a timing of receiving the light at the light-receiving element (42),
**characterised in that** the distance calculating device (46) is configured to calculate the timing of receiving the light based on a first timing when a rising value of the voltage signal coincides with the threshold value and a second timing when a falling value of the voltage signal coincides with the threshold value.

2. The object detector (100) according to claim 1,
wherein a maximum value of the voltage signal ringing after the undershoot is less than or equal to the threshold value.

3. The object detector (100) according to claim 1 or 2,
wherein the waveform processing circuit (60) further includes an amplifier circuit (60b) .

4. The object detector (100) according to claim 3,
wherein the amplifier circuit (60b) has an amplification factor to generate the undershoot.

5. The object detector (100) according to claim 4,
wherein a frequency bandwidth and the amplification factor of the amplifier circuit (60b) are in a range that the maximum value of the voltage signal ringing after the undershoot is generated is less than or equal to the threshold value.

6. The object detector (100) according to claim 3 or 4,
wherein the waveform processing circuit (60) further includes a filter circuit (60c) disposed downstream of the amplifier circuit (60b).

7. The object detector (100) according to claim 6,
wherein the filter circuit (60c) induces the undershoot.

8. The object detector (100) according to claim 6 or 7,
wherein the filter circuit (60c) is a high-pass filter (HPF).

9. The object detector (100) according to any one of claims 6 through 8,
wherein a time constant of the filter circuit (60c) is in a range that the maximum value of the voltage signal ringing after the undershoot is generated is less than or equal to the threshold value.

10. The object detector (100) according to any one of claims 6 through 9,
wherein the filter circuit (60c) is configured to set a time period from a time when the undershoot is generated in the voltage signal to a time when the voltage signal returns to a ground level to be longer than a setting time of a ringing of the voltage signal.

11. The object detector (100) according to any one of claim 1 through claim 10,
wherein the light-emitting element (10) emits pulsed light, and
wherein a relation of Tf1 / Tr1 > Tf2 / Tr2 is satisfied,
where
Tr1 is a rise time of a pulse of the pulsed light emitted from the light-emitting element (10),
Tf1 is a fall time of the pulse of the emitted pulsed light,
Tr2 is a rise time of the voltage signal, and
Tf2 is a fall time of the voltage signal.

12. A sensor (1000) comprising:
the object detector (100) according to any one of claim 1 through 11; and
a monitoring controller (300) to obtain, in response to an output of the object detector (100), movement data including at least one of presence of an object, a direction of movement of the object, and a speed of movement of the object.

13. A movable device (600) comprising:
a movable body (400); and
at least one of the object detector (100) according to any one of claim 1 through 11 disposed in the movable body (400) and the sensor (1000) according to claim 12 disposed in the movable body (400).

## Patentansprüche

1. Objektdetektor (100), umfassend
eine Projektionsvorrichtung (200), umfassend ein lichtemittierendes Element (10), das konfiguriert ist, Licht zu emittieren, um das Licht auf das Objekt zu projizieren;
einen optischen Detektor (40); und
eine Abstandberechnungsvorrichtung (46),
wobei der optische Detektor (40) Folgendes umfasst:
ein lichtempfangendes Element (42), das konfiguriert ist, das von der Projektionsvorrichtung (10) auf das Objekt projizierte und vom Objekt reflektierte Licht zu empfangen; und
eine Schaltungsvorrichtung (44), wobei die Schaltungsvorrichtung Folgendes umfasst:
eine Wellenform-Verarbeitungsschaltung (60), um Unterschwingung in einem Spannungssignal zu erzeugen gemäß einer Ausgangsspannung vom lichtempfangenden Element (42); und
eine Binarisierungsschaltung (70), um das Spannungssignal basierend auf einem Schwellenwert zu binarisieren;
wobei die Abstandberechnungsvorrichtung (46) konfiguriert ist, einen Abstand zum Objekt basierend auf einem Zeitpunkt des Emittierens des Lichts vom lichtemittierenden Element (10) und einem Zeitpunkt des Empfangens des Lichts beim lichtempfangenden Element (42) zu berechnen,
**dadurch gekennzeichnet, dass** die Abstandberechnungsvorrichtung (46) konfiguriert ist, den Zeitpunkt des Empfangens des Lichts basierend auf einem ersten Zeitpunkt, zu dem ein steigender Wert des Spannungssignals mit dem Schwellenwert übereinstimmt, und einem zweiten Zeitpunkt, zu dem ein sinkender Wert des Spannungssignals mit dem Schwellenwert übereinstimmt, zu berechnen.

2. Objektdetektor (100) nach Anspruch 1,
wobei ein Maximalwert des Spannungssignals, das nach der Unterschwingung nachschwingt, geringer oder gleich ist wie der Schwellenwert.

3. Objektdetektor (100) nach Anspruch 1 oder 2,
wobei die Wellenform-Verarbeitungsschaltung (60) ferner eine Verstärkerschaltung (60b) umfasst.

4. Objektdetektor (100) nach Anspruch 3,
wobei die Verstärkerschaltung (60b) einen Verstärkungsfaktor hat, um die Unterschwingung zu erzeugen.

5. Objektdetektor (100) nach Anspruch 4,
wobei eine Frequenzbandbreite und der Verstärkungsfaktor der Verstärkerschaltung (60b) in einem Bereich sind, dass der Maximalwert des Spannungssignals, das nachschwingt, nachdem die Unterschwingung erzeugt wird, geringer oder gleich ist wie der Schwellenwert.

6. Objektdetektor (100) nach Anspruch 3 oder 4,
wobei die Wellenform-Verarbeitungsschaltung (60) ferner eine Filterschaltung (60c) umfasst, die stromabwärts der Verstärkerschaltung (60b) angeordnet ist.

7. Objektdetektor (100) nach Anspruch 6,
wobei die Filterschaltung (60c) die Unterschwingung induziert.

8. Objektdetektor (100) nach Anspruch 6 oder 7,
wobei die Filterschaltung (60c) ein Hochpassfilter (HPF) ist.

9. Objektdetektor (100) nach einem der Ansprüche 6 bis 8,
wobei eine Zeitkonstante der Filterschaltung (60c) in einem Bereich ist, dass der Maximalwert des Spannungssignals, das nachschwingt, nachdem die Unterschwingung erzeugt wird, geringer oder gleich ist wie der Schwellenwert.

10. Objektdetektor (100) nach einem der Ansprüche 6 bis 9,
wobei die Filterschaltung (60c) konfiguriert ist festzustellen, dass ein Zeitraum von einer Zeit, zu der die Unterschwingung im Spannungssignal erzeugt wird, zu einer Zeit, zu der das Spannungssignal zu einem Grundniveau zurückkehrt, größer ist als eine Einstellzeit eines Nachschwingens des Spannungssignals.

11. Objektdetektor (100) nach einem der Ansprüche 1 bis 10,
wobei das lichtemittierende Element (10) gepulstes Licht emittiert, und
wobei ein Bezug von Tf1 / Tr1 > Tf2 / Tr2 erfüllt ist,
wobei
Tr1 eine Anstiegszeit eines Pulses des vom lichtemittierenden Element (10) emittierten gepulsten Lichts ist,
Tf1 eine Abfallzeit des Pulses des emittierten gepulsten Lichts ist,
Tr2 eine Anstiegszeit des Spannungssignals ist, und
Tf2 eine Abfallzeit des Spannungssignals ist.

12. Sensor (1000), umfassend:
den Objektdetektor (100) nach einem der Ansprüche 1 bis 11; und
eine Überwachungssteuerung (300), um als Reaktion auf eine Ausgabe des Objektdetektors (100) Bewegungsdaten zu erhalten, umfassend mindestens eines aus dem Vorhandensein eines Objekts, einer Bewegungsrichtung des Objekts und einer Bewegungsgeschwindigkeit des Objekts.

13. Bewegliche Vorrichtung (600), umfassend:
einen beweglichen Körper (400); und
mindestens eines aus dem Objektdetektor (100) nach einem der Ansprüche 1 bis 11, der im beweglichen Körper (400) angeordnet ist, und dem Sensor (1000) nach Anspruch 12, der im beweglichen Körper (400) angeordnet ist.

## Revendications

1. Détecteur d'objet (100) comprenant :
un dispositif de projection (200) comprenant un élément émetteur de lumière (10) configuré pour émettre de la lumière, pour projeter la lumière sur l'objet ;
un détecteur optique (40) ; et
un dispositif de calcul de distance (46)
le détecteur optique (40) comprenant :
un élément récepteur de lumière (42) configuré pour recevoir la lumière projetée du dispositif de projection (10) sur l'objet et réfléchie depuis l'objet ; et
un dispositif de circuit (44), le dispositif de circuit comprenant :
un circuit de traitement de forme d'onde (60) pour générer une sous-oscillation dans un signal de tension selon une tension de sortie depuis l'élément récepteur de lumière (42) ; et
un circuit de binarisation (70) pour binariser le signal de tension sur la base d'une valeur seuil ;
le dispositif de calcul de distance (46) étant configuré pour calculer une distance jusqu'à l'objet sur la base d'un minutage d'émission de la lumière depuis l'élément émetteur de lumière (10) et d'un minutage de réception de la lumière au niveau de l'élément récepteur de lumière (42),
**caractérisé en ce que** le dispositif de calcul de distance (46) est configuré pour calculer le minutage de réception de la lumière sur la base d'un premier minutage lorsqu'une valeur montante du signal de tension coïncide avec la valeur seuil et d'un deuxième minutage lorsqu'une valeur descendante du signal de tension coïncide avec la valeur seuil.

2. Détecteur d'objet (100) selon la revendication 1,
dans lequel une valeur maximale du signal de tension déclenché après la sous-oscillation est inférieure ou égale à la valeur seuil.

3. Détecteur d'objet (100) selon la revendication 1 ou 2,
dans lequel le circuit de traitement de forme d'onde (60) comprend en outre un circuit d'amplificateur (60b).

4. Détecteur d'objet (100) selon la revendication 3,
dans lequel le circuit d'amplificateur (60b) possède un facteur d'amplification pour générer la sous-oscillation.

5. Détecteur d'objet (100) selon la revendication 4,
dans lequel une bande passante de fréquence et le facteur d'amplification du circuit d'amplificateur (60b) se trouvent dans une plage telle que la valeur maximale du signal de tension déclenché après la génération de la sous-oscillation est inférieure ou égale à la valeur seuil.

6. Détecteur d'objet (100) selon la revendication 3 ou 4,
dans lequel le circuit de traitement de forme d'onde (60) comprend en outre un circuit de filtre (60c) disposé en aval du circuit d'amplificateur (60b).

7. Détecteur d'objet (100) selon la revendication 6,
dans lequel le circuit de filtre (60c) induit la sous-oscillation.

8. Détecteur d'objet (100) selon la revendication 6 ou 7,
dans lequel le circuit de filtre (60c) est un filtre passe-haut (HPF).

9. Détecteur d'objet (100) selon l'une quelconque des revendications 6 à 8,
dans lequel une constante de temps du circuit de filtre (60c) se trouve dans une plage telle que la valeur maximale du signal de tension déclenché après la génération de la sous-oscillation est inférieure ou égale à la valeur seuil.

10. Détecteur d'objet (100) selon l'une quelconque des revendications 6 à 9,
dans lequel le circuit de filtre (60c) est configuré pour définir une durée d'un moment auquel la sous-oscillation est générée dans le signal de tension à un moment auquel le signal de tension revient à un niveau de base, comme étant plus longue qu'un temps d'établissement d'un déclenchement du signal de tension.

11. Détecteur d'objet (100) selon l'une quelconque des revendications 1 à 10,
dans lequel l'élément émetteur de lumière (10) émet une lumière pulsée, et
dans lequel une relation Tf1 / Tr1 > Tf2 / Tr2 est satisfaite,
où
Tr1 est un temps de montée d'une impulsion de la lumière pulsée émise depuis l'élément émetteur de lumière (10),
Tf1 est un temps de descente de l'impulsion de la lumière pulsée émise,
Tr2 est un temps de montée du signal de tension, et
Tf2 est un temps de de descente du signal de tension.

12. Capteur (1000) comprenant :
le détecteur d'objet (100) selon l'une quelconque des revendications 1 à 11 ; et
un dispositif de commande de surveillance (300) pour obtenir, en réponse à une sortie du détecteur d'objet (100), des données de déplacement comprenant au moins un élément parmi la présence d'un objet, une direction de déplacement de l'objet et une vitesse de déplacement de l'objet.

13. Dispositif mobile (600) comprenant un corps mobile (400) ; et
au moins élément parmi le détecteur d'objet (100) selon l'une quelconque des revendications 1 à 11 disposé dans le corps mobile (400) et le capteur (1000) selon la revendication 12 disposé dans le corps mobile (400).
